# EUROPEAN PATENT APPLICATION

(11) **EP 4 583 203 A1**
(43) Date of publication of application: **09.07.2025**
(21) Application number: 24817828.7
(22) Date of filing: 06.11.2024
(51) Int. Cl.: H01M 4/36, H01M 4/62, H01M 4/525, H01M 4/58, H01M 10/0525

(54) **POSITIVE ELECTRODE ACTIVE MATERIAL AND PREPARATION METHOD THEREFOR, POSITIVE ELECTRODE, AND LITHIUM-ION BATTERY**

(30) Priority: 06.11.2023 CN 202311463219
(71) Applicant: Tianjin B&M Science And Technology Co., Ltd., Tianjin 300384 (CN)
(72) Inventor: LI, Qi, Tianjin 300384 (CN); FAN, Yamin, Tianjin 300384 (CN); LV, Fei, Tianjin 300384 (CN); XU, Ning, Tianjin 300384 (CN)
(74) Representative: Ström & Gulliksson AB
(86) International application number: PCT/CN2024/130100
(87) International publication number: WO 2025/098363

(57) **Abstract**

The present application relates to a positive electrode active material and a method for preparing thereof, a positive electrode, a lithium-ion battery, and an electrical device. In the positive electrode active material provided by the present application, an anchoring layer is coated on the surface of the substrate, wherein sulfur elements with lower average valence may be chemically bonded with active elements (transition metals, B, or the like) in lithium transition metal oxide particles, thereby effectively stabilizing metal active sites on the surface of the positive electrode active material, and weakening the dissolution of the transition metal on the surface caused by the reaction between surface active transition metal elements with electrolyte solution. The stabilizing layer laminated on the anchoring layer can protect the anchoring layer, and the stabilizing layer has higher electrochemical activity, which can effectively inhibit the polarization of the material, and the stabilizing layer cooperates with the anchoring layer to make the positive electrode active material provided in the present application have both higher ionic conductivity and electronic conductivity, and can significantly improve electrochemical performances of the positive electrode active material, including high capacity, low internal resistance and high cycle stability.

## Description

This application claims priority to Chinese Patent Application No. 202311463219.0, titled "POSITIVE ELECTRODE ACTIVE MATERIAL AND PREPARATION METHOD THEREOF, POSITIVE ELECTRODE, AND LITHIUM-ION BATTERY", filed on November 06, 2023 with the China National Intellectual Property Administration, which is incorporated herein by reference in its entirety.

### FIELD

The present application relates to the field of positive electrode material technology, in particular to a positive electrode and a preparation method thereof, a positive electrode, and a lithium-ion battery.

### BACKGROUND

Lithium-ion batteries have the advantages of high operating voltage, light weight, small size, low self-discharge rate, long cycle life and high energy density, and are currently widely used in mobile terminal products such as mobile phones, laptops, and tablet computers.

However, the lithium-ion positive electrode material battery has the problem of surface structural abnormality under conditions of high voltage and high temperature charge and discharge, which in turn causes a significant attenuation of battery performance.

### SUMMARY

Based on the above, the present application provides a positive electrode active material and a preparation method thereof, a positive electrode, and a lithium-ion battery. The positive electrode active material provided by the present application can effectively reduce dissolution of metal and improve the structural stability of the material, thereby effectively improving the electrochemical performance of the material.

In a first aspect, the present application provides a positive electrode active material, comprising lithium transition metal oxide particles and a coating layer arranged on a surface of the lithium transition metal oxide particles, where the coating layer comprises an anchoring layer and a stabilizing layer arranged laminatedly, the anchoring layer is closer to the surface of the lithium transition metal oxide particles than the stabilizing layer;

the anchoring layer and the stabilizing layer comprise sulfur elements, an average valence of the sulfur elements contained in the stabilizing layer is greater than an average valence of the sulfur elements contained in the anchoring layer;

the anchoring layer is configured to anchor active elements in the lithium transition metal oxide particles, and in the lithium transition metal oxide particles having the coating layer, the transition metal has a total dissolution amount of ≤ 4000ppm.

In one embodiment, the lithium transition metal oxide particles have a chemical formula of Li₁₊ₓNi_{y}R_{z}M_{1-y-z}Oᵤ, where -0.2≤x≤0.2, 0.3≤y≤0.8, 0≤z≤0.7, y+z≤1, 1.8≤u≤2.2; R includes one or more of Co and Mn; M includes one or more of Al, Zr, Mg, Ti, W, B, Y, Sr, Nb and Mo elements.

In one embodiment, the anchoring layer is formed by inducing Ni, R or M in the lithium transition metal oxide particles by sulfide Q₂S, Q includes one or more of Na⁺, Li⁺ and NH₄⁺; the anchoring layer satisfies that m1=-2, where m1 is the average valence of the sulfur elements contained in the anchoring layer;

the stabilizing layer is formed by inducing the sulfide Q₂S by elemental sulfur, and the sulfur elements in the stabilizing layer located on an outermost surface have a valence m satisfying -2<m<0, the stabilizing layer satisfies that -2<m2<0; where m2 is the average valence of the sulfur elements contained in the stabilizing layer.

In one embodiment, the lithium transition metal oxide particles have a particle size of 2µm to 15µm.

In one embodiment, the anchoring layer has a thickness of 5nm to 50nm.

In one embodiment, the stabilizing layer has a thickness of 5nm to 50nm.

In one embodiment, after the positive electrode active material is assembled into a button-type battery and cycled for 50 cycles, in an X-ray diffraction refinement test of the positive electrode active material, 003 peak/104 peak has a ratio of ≥1.45.

In one embodiment, after the positive electrode active material is assembled into a button-type battery and cycled for 50 cycles, in an X-ray diffraction refinement test of the positive electrode active material, the transition metal and oxygen have an interlayer distance change rate ΔH of ≤ 10%; where ΔH=(H₂-H₁)/H₁, H₂ represents an interlayer distance between the transition metal and oxygen in the positive electrode active material after 50 cycles; H₁ represents an interlayer distance between the transition metal and oxygen in the positive electrode active material at 0 cycle.

In a second aspect, the present application provides a method for preparing a positive electrode active material, comprising the following steps:
mixing the lithium transition metal oxide particles and sulfide Q₂S, and calcining at a temperature of 200°C to 700°C to prepare sulfide Q₂S pre-coated lithium transition metal oxide modified material, where Q includes one or more of Na⁺, Li⁺ and NH₄⁺;
mixing the sulfide Q₂S pre-coated lithium transition metal oxide modified material and dispersant in a carbon disulfide solvent to prepare a sol A;
dissolving elemental sulfur in a carbon disulfide solvent to prepare a solution B;
introducing the solution B into the sol A for deposition, performing solid-liquid separation, and then sintering at a temperature of 200°C to 800°C to prepare the positive electrode active material.

In one embodiment, the lithium transition metal oxide particles and the sulfide Q₂S have a mass ratio of 1: (0.001 to 0.1).

In one embodiment, the sol A has a solid content of 5% to 50%.

In one embodiment, the elemental sulfur in the solution B has a concentration of 0.001mol/L to 0.1mol/L.

In one embodiment, the solution B is introduced into the sol A in an introduction rate of 0.4g/min to 0.6g/min.

In one embodiment, the sulfide pre-coated lithium transition metal oxide modified material and the elemental sulfur have a mass ratio of 1:(0.001 to 0.1).

In one embodiment, the dispersant includes one or more of dodecyltrimethylammonium chloride, dodecyltrimethylammonium bromide and octadecyldimethylbenzyl ammonium chloride.

In one embodiment, a method for preparing the lithium transition metal oxide particles comprises steps of:
mixing a precursor with a lithium source to prepare a mixture; and
sintering the mixture at a temperature of 400°C to 1000°C to prepare the lithium transition metal oxide particles;
where the precursor has a chemical formula of Ni_{y1}R_{z1}M_{1-y1-z1}Oᵤ₁, where 0.3≤y1≤0.8, 0≤z1≤0.7, y1+z1≤1, 1.8≤u1≤2.2; R includes one or more of Co and Mn, M includes one or more of Al, Zr, Mg, Ti, W, B, Y, Sr, Nb and Mo elements.

In a third aspect, the present application provides a positive electrode, comprising a positive electrode current collector and a positive electrode active material layer laminated on a surface of the positive electrode current collector, where the positive electrode active material layer comprises the positive electrode active material according to any embodiment of the first aspect of the present application or comprises the positive electrode active material prepared by the method described in any embodiment of the second aspect of the present application.

In a fourth aspect, the present application provides a lithium-ion battery, comprising:
the positive electrode according to the third aspect of the present application;
a negative electrode, comprising a negative electrode current collector and a negative electrode active material layer located on the negative electrode current collector;
a separator and an electrolyte solution.

In the positive electrode active material provided by the present application, an anchoring layer is coated on the surface of lithium transition metal oxide particles, wherein sulfur elements with lower average valence may be chemically bonded with active elements (transition metals, B, or the like) in lithium transition metal oxide particles, thereby effectively stabilizing metal active sites on the surface of the positive electrode active material, and weakening the dissolution of the transition metal on the surface caused by the reaction between surface active transition metal elements with the electrolyte solution, thereby improving the structural stability of the interface of the positive electrode active material. In the stabilizing layer laminated on the anchoring layer, the average compound of the sulfur elements is higher than that of the anchoring layer, which can protect the anchoring layer, make the stabilizing layer have higher electrochemical activity, and can effectively inhibit the polarization of the material, and the stabilizing layer cooperates with the anchoring layer to make the positive electrode active material provided in the present application have both higher ionic conductivity and electronic conductivity, which can significantly improve electrochemical performances of the positive electrode active material, including high capacity, low internal resistance and high cycle stability. Furthermore, the positive electrode active material provided in the present application is easy to prepare and can be mass-produced.

### BRIEF DESCRIPTION OF THE DRAWINGS

FIG. 1 is a schematic structural diagram of the positive electrode active material according to an embodiment of the present application, where 10 represents lithium transition metal oxide particles, 20 represents an anchoring layer, 30 represents a stabilizing layer.
FIG. 2 is a XRD comparison diagram of the positive electrode active material prepared in Examples 1 to 2 of the present application and Comparative Examples 1 to 2.
FIG. 3 is a comparison diagram of the dissolution of Ni and Co elements in the electrolyte solution stored at 60°C for the positive electrode active material prepared in Examples 1 to 3 of the present application and Comparative Examples 1 to 4.
FIG. 4 is a comparison diagram of a rate performance of the positive electrode active material prepared in Examples 1 to 3 of the present application and Comparative Examples 1 to 4 at 25°C.

### DETAILED DESCRIPTION OF EMBODIMENTS

The following is a further complete and clear description of a positive electrode active material and a preparation method thereof, a positive electrode, a lithium-ion battery, and an electrical device of the present application in conjunction with specific embodiments. The present application may be implemented in many different forms and is not limited to embodiments described herein. On the contrary, the purpose of providing these embodiments is to make the understanding of the disclosure of the present application more thorough and comprehensive.

Unless otherwise defined, all technical and scientific terms used herein have the same meaning as those generally understood by technicians in the technical field of the present application. The terms used in the specification of the present application are only for the purpose of describing specific embodiments and are not intended to limit the present application.

In the present application, "one or more" refers to any one, any two, or any two or more of the listed items.

In the present application, "first aspect", "second aspect", "third aspect", "fourth aspect", "fifth aspect", or the like are only used for describing purposes and cannot be understood as indicating or implying relative importance or quantity, nor can they be understood as implicitly indicating the importance or quantity of the indicated technical features. Moreover, "first", "second", "third", "fourth", "fifth", and the like only serve the purpose of non-exhaustive enumeration and description, and it should be understood that they do not constitute a closed limitation on quantity.

In the present application, the technical features described in an open form include closed technical solutions composed of the listed features, and also include open technical solutions containing the listed features.

In the present application, unless otherwise specified, the numerical range involved is deemed to be continuous and includes the minimum and maximum values of the range, as well as each value between the minimum and maximum values. Further, when the range refers to an integer, it includes each integer between the minimum and maximum values of the range. In addition, when multiple ranges are provided to describe features or characteristics, the ranges may be merged. In other words, unless otherwise specified, all ranges disclosed in the present application should be understood to include any and all sub-ranges included therein.

The content percentage involved in the present application, unless otherwise specified, refers to the mass percentage for solid-liquid mixing and solid-solid mixing, and the volume percentage for liquid-liquid mixing.

The concentration percentage involved in the present application, unless otherwise specified, refers to the final concentration. The final concentration refers to the proportion of the added component in the system after the addition of the component.

The temperature parameters in the present application, unless otherwise specified, refer to both constant temperature treatment and treatment within a certain temperature range. The constant temperature treatment allows the temperature to fluctuate within the precision range of the instrument control.

Based on rich experience and extensive research, the inventors of the present application have found that the lithium-ion positive electrode material has a surface structural abnormality problem under high voltage or charge and discharge conditions, which will cause degradation of battery performance. The reason is that on the one hand, when the positive electrode active material is charged and discharged at high voltage and high temperature, the highly active transition metal sites on the surface react with the electrolyte solution to form a byproduct HF acid, which causes the dissolution of active transition metal elements on the surface of the material; on the other hand, due to the excessive activity of the transition metal elements on the surface, the traditional solid phase oxide coating method, that is, coating with oxides such as aluminum oxide, magnesium oxide, titanium oxide and zinc oxide, is only a physical coating on the surface of the substrate, which cannot effectively passivate the active sites of the transition metal elements, and thus cannot stabilize the transition metal elements on the surface.

Based on the above, in a first aspect, the present application provides a positive electrode active material, comprising lithium transition metal oxide particles and a coating layer arranged on the surface of the lithium transition metal oxide particles, wherein the coating layer comprises an anchoring layer and a stabilizing layer arranged laminatedly, the anchoring layer is closer to the surface of the lithium transition metal oxide particles than the stabilizing layer;
the anchoring layer and the stabilizing layer comprise sulfur elements, and an average valence of the sulfur elements contained in the stabilizing layer is greater than an average valence of the sulfur elements contained in the anchoring layer;
the anchoring layer is configured to anchor the active elements in the lithium transition metal oxide particles, and in the lithium transition metal oxide particles having the coating layer, a transition metal has a total dissolution amount of ≤ 4000ppm.

In the positive electrode active material provided in the present application, an anchoring layer is formed by inducing chemical bonding of active elements and sulfur elements with relatively low average valence on the surface of the lithium transition metal oxide particles, to stabilize the transition metal active sites on the surface of the lithium transition metal oxide particles, thereby making the transition metal in the positive electrode active material provided in the present application have a total dissolution amount of ≤4000ppm. The valence of sulfur elements in the stabilizing layer located on the outermost surface is higher than the valence of sulfur elements in the anchoring layer. In this way, the stabilizing layer has a higher electrochemical activity, so that the positive electrode active material provided in the present application has both high ionic conductivity and electronic conductivity, and the electrochemical performance of the positive electrode active material is improved, including high capacity, low internal resistance and high cycle stability.

In one embodiment, the lithium transition metal oxide particles have a chemical formula of Li₁₊ₓNi_{y}R_{z}M_{1-y-z}Oᵤ, where -0.2≤x≤0.2, 0.3≤y≤0.8, 0≤z≤0.7, y+z≤1, 1.8≤u≤2.2; R includes one or more of Co and Mn; M includes one or more of Al, Zr, Mg, Ti, W, B, Y, Sr, Nb and Mo elements; the values of x, y, z, and u may vary depending on a ratio between the elements, but are all set within the range that allows the compound represented by the chemical formula to be used as lithium transition metal oxide particles. Specifically, when R is Co, the chemical formula of the lithium transition metal oxide particles includes, but is not limited to, ternary materials such as Li₁₊ₓNi_{y}Co_{z}Al_{1-y-z}O₂. When R is Mn, the chemical formula of the lithium transition metal oxide particles includes, but is not limited to, binary materials such as LiNi_{0.5}Mn_{0.5}O₂ and LiNi_{0.9}Mn_{0.1}O₂. When R is Co and Mn, the chemical formula of the lithium transition metal oxide particles includes, but is not limited to, quaternary materials such as LiNi_{1/3}Co_{1/3}Mn_{1/3}O₂, LiNi_{0.5}Co_{0.2}Mn_{0.3}O₂, LiNi_{0.6}Co_{0.1}Mn_{0.3}O₂, LiNi_{0.63}Co_{0.08}Mn_{0.29}O₂, LiNi_{0.63}Co_{0.05}M_{n0.32}O₂, LiNi_{0.65}Co_{0.07}Mn_{0.28}O₂, LiNi_{0.7}Co_{0.1}Mn_{0.3}O₂, LiNi_{0.72}Co_{0.05}Mn_{0.23}O₂, LiNi_{0.68}Co_{0.08}Mn_{0.24}O₂, LiNi_{0.83}Co_{0.12}Mn_{0.05}O₂, LiNi_{0.8}Co_{0.1}Mn_{0.1}O₂, LiNiₐCo_{b}Mn_{c}Al_{d}O₂ (a+b+c+d=1).

In one embodiment, the anchoring layer is formed by inducing the active elements in the lithium transition metal oxide particles by sulfide Q₂S. Q includes one or more of Na⁺, Li⁺ and NH₄⁺. The anchoring layer satisfies m1=-2; where m1 is the average valence of the sulfur elements contained in the anchoring layer.

In the present application, the anchoring layer is formed by interface induction of sulfide Q₂S pre-coated lithium transition metal oxide modified material. The sulfide Q₂S anchors the active elements at the interface of the lithium transition metal oxide particles, so that the sulfur elements therein are connected to the active elements in the lithium transition metal oxide particles through chemical bonds, thereby reducing the transition metal dissolution amount of the positive electrode active material in the present application, and ensuring that the transition metal has a total dissolution amount of ≤4000ppm. In one embodiment, the lithium transition metal oxide particles include one or more active elements of Ni, Co, Mn, Al, Zr, Mg, Ti, W, Y, Sr, Nb and Mo. Under appropriate conditions, the active elements at the interface may form stable nickel sulfide, cobalt sulfide, manganese sulfide, aluminum sulfide, zirconium sulfide, magnesium sulfide, titanium sulfide, tungsten sulfide, boron sulfide, yttrium sulfide, strontium sulfide, niobium sulfide and molybdenum sulfide with S²⁻. Therefore, it can be understood that the anchoring layer includes one or more of nickel sulfide, cobalt sulfide, manganese sulfide, aluminum sulfide, zirconium sulfide, magnesium sulfide, titanium sulfide, tungsten sulfide, boron sulfide, yttrium sulfide, strontium sulfide, niobium sulfide and molybdenum sulfide. In one embodiment, conditions for interface induction of sulfide Q₂S pre-coated lithium transition metal oxide modified material comprise: a sintering temperature of 200°C to 800°C. In one embodiment, the conditions for interface induction of sulfide Q₂S pre-coated lithium transition metal oxide modified material comprise: the sintering temperature of 200°C to 700°C.

In one embodiment, the stabilizing layer is formed by inducing the sulfide Q₂S by elemental sulfur, so that the stabilizing layer satisfies: -2<m2<0, where m2 is the average valence of the sulfur elements contained in the stabilizing layer. In the present application, the stabilizing layer is formed by interfacial induction between the sulfide Q₂S pre-coated lithium transition metal oxide modified material and the elemental sulfur. The sulfide Q₂S provides S²⁻, and under the induction of the elemental sulfur in the outer layer, the sulfur elements in the outermost stabilizing layer have the valence m satisfying -2<m<0. In this way, the stabilizing layer has a higher electrochemical activity, and the sulfur elements with a valence of >-2 may further stabilize the active elements, thereby improving the average valence of the active elements in the positive electrode active material provided in the present application. Furthermore, taking the transition metal Ni contained in the lithium transition metal oxide particles as an example, the sulfur elements with the valence of >-2 in the stabilizing layer have a stabilizing effect on the active sites of the Ni element, thereby increasing the average valence of the Ni element (>2.3), thereby inhibiting the formation of surface rock salt phases such as divalent nickel compound NiO, thereby ensuring the electrochemical performance of the positive electrode active material provided in the present application. The conditions for the interface induction between the sulfide Q₂S pre-coated lithium transition metal oxide modified material and the elemental sulfur comprise: the sintering temperature of 200°C to 800°C.

In addition, it can be understood that in the chemical formula of the above-mentioned lithium transition metal oxide particles, y has a value of 0.3≤y≤0.8. That is, a proportion of the Ni element in the lithium transition metal oxide particles based on the sum of the molar numbers of Ni, R, and M is ≥30%. In this way, there are enough active cationic sites in the lithium transition metal oxide particles. The S²⁻ in the sulfide Q₂S and the active cations in the lithium transition metal oxide particles attract each other through electrostatic interaction, inducing the sulfide Q₂S and the lithium transition metal oxide particles to connect through chemical bonds, thereby ensuring the stabilizing effect of the anchoring layer on the active sites.

Furthermore, to avoid the self-formation of sulfides in the lithium transition metal oxide particles that reduces the cycle life of the battery, in one embodiment, the S element in the lithium transition metal oxide particles has a molar fraction of ≤1000 ppm.

The particle size of lithium transition metal oxide particles has an important influence on the energy density of the battery cell and the compaction density of the pole piece. A slightly smaller particle size of the substrate may result in a slightly lower energy density of the battery cell. A slightly larger particle size of the substrate may result in a slightly lower compaction density of the pole piece. In order to balance the energy density and compaction density of lithium transition metal oxide particles, in one embodiment, the lithium transition metal oxide particles have the particle size of 2µm to 15µm. It can be understood that the particle size of the lithium transition metal oxide particles may be selected from any value between 2µm to 15µm. Specifically, the particle size of the lithium transition metal oxide particles includes, but is not limited to, 2 µm, 4 µm, 5 µm, 6 µm, 7 µm, 8 µm, 9 µm, 10 µm, 11 µm, 12 µm, 13 µm, 14 µm or 15 µm. In the present application, unless otherwise specified, the size, particle size and diameter generally refer to the average value. In the present application, the "particle size" represents the average particle size of a sphere or a spheroid.

In one embodiment, the anchoring layer has a thickness of 5 nm to 50 nm. It can be understand that the thickness of the anchoring layer may be selected from any value between 5 nm and 50 nm. Specifically, the thickness of the anchoring layer includes, but is not limited to, 5 nm, 10 nm, 15 nm, 20 nm, 30 nm, 40 nm or 50 nm.

In one embodiment, the stabilizing layer has the thickness of 5nm to 50nm. It can be understand that the thickness of the stabilizing layer may be selected from any value between 5nm to 50nm. Specifically, the thickness of the stabilizing layer includes, but is not limited to, 5nm, 10 nm, 15 nm, 20 nm, 30 nm, 40 nm or 50nm.

In the present application, the thickness of the anchoring layer and the stabilizing layer is set within this range, which is conducive to achieving optimal electrochemical performance of the positive electrode active material, can avoid the inability to isolate the interface reaction between the electrode and the electrolyte solution caused by the anchoring layer and stabilizing layer being slightly thin, and can further avoid the instability of the phase interface caused by the anchoring layer and stabilizing layer being slightly thick.

In one embodiment, the coating layer and the lithium transition metal oxide particles have a mass ratio of 1: (100 to 1000). In this ratio, the masses of the coating layer and the lithium transition metal oxide particles cooperate with each other, and the thickness of the coating layer is easily adjusted, so that the positive electrode active material can effectively inhibit the dissolution of active transition metals. When the positive electrode active material prepared in the present application is assembled into a button-type battery at 4.45V and in a state of charge (SOC) of 100%, the active transition metal elements, such as Ni, Co, Mn, Al, Zr, Mg, Ti, W, B, Y, Sr, Nb, Mo, have a total dissolution amount of not higher than 4000ppm after the button-type battery being stored at 60°C for 30 days, and the electronic conductivity, lithium ion conductivity and interface stability can be further improved. Specifically, the mass ratio of the coating layer and the lithium transition metal oxide particles includes, but is not limited to, 1:100, 1:200, 1:300, 1:400, 1:500, 1:600, 1:700, 1:800, 1:900 or 1:1000.

In a second aspect, the present application provides a method for preparing the positive electrode active material described in any embodiment of the first aspect of the present application, comprising the following steps:
S3. mixing the lithium transition metal oxide particles and sulfide Q₂S, and calcining at a temperature of 200°C to 700°C to prepare sulfide Q₂S pre-coated lithium transition metal oxide modified material, where Q includes one or more of Na⁺, Li⁺ and NH₄⁺;
S4. mixing the sulfide Q₂S pre-coated lithium transition metal oxide modified material and dispersant in a carbon disulfide solvent to prepare a sol A;
S5. dissolving elemental sulfur in a carbon disulfide solvent to prepare a solution B;
S6. introducing the solution B into the sol A for deposition, performing solid-liquid separation, and then sintering at a temperature of 200°C to 800°C to form the anchoring layer and the stabilizing layer to prepare the positive electrode active material.

In one embodiment, in step S3, the lithium transition metal oxide particles and the sulfide Q₂S has the mass ratio of 1: (0.001 to 0.1). By limiting the mass ratio of the lithium transition metal oxide particles and sulfide Q₂S, the lithium transition metal oxide particles and sulfide Q₂S are easy to disperse and the dispersion time may be effectively shortened. Furthermore, the mass ratio of the lithium transition metal oxide particles and sulfide Q₂S includes, but is not limited to, 1:0.001, 1:0.005 or 1:0.1.

In one embodiment, in step S3, the process parameters for mixing the lithium transition metal oxide particles and sulfide Q₂S comprise: a mixing time of ≥ 24h.

In addition, it can be understood that in step S3, the device for mixing lithium transition metal oxide particles and sulfide Q₂S is not limited in the present application, and the device for mixing may be exemplified by a microwave ultrasonic instrument.

In one embodiment, in step S3, process parameters for calcination comprise: a calcination temperature of 200°C to 700°C, a calcination time of 6h to 24h. Specifically, the calcination temperature includes, but is not limited to, 200°C, 250°C, 300°C, 350°C, 400°C, 450°C, 500°C, 600°C or 700°C. The calcination time includes, but is not limited to, 6h, 7h, 8h, 10h, 12h, 15h, 18h, 20h, 22h or 24h.

In one embodiment, the sulfide Q₂S pre-coated lithium transition metal oxide modified material and the sulfur has a mass ratio of 1: (0.001 to 0.1). Specifically, the mass ratio of the sulfide Q₂S pre-coated lithium transition metal oxide modified material and the sulfur includes, but is not limited to, 1: 0.001, 1: 0.005, or 1: 0.1: 0.1. By limiting the mass ratio of the sulfide Q₂S pre-coated lithium transition metal oxide modified material and the sulfur, the sulfide located on the outermost surface can react with sulfur, and completeness of the reaction is facilitated.

In one embodiment, in step S4, the dispersant includes one or more of dodecyltrimethylammonium chloride, dodecyltrimethylammonium bromide and octadecyldimethylbenzyl ammonium chloride.

In one embodiment, in step S4, the sol A has a solid content of 5% to 50%. The solid content of the sol A includes, but is not limited to 5%, 10%, 15%, 20%, 25%, 30%, 35%, 40%, 45% or 50%.

In one embodiment, in step S5, the elemental sulfur in solution B has a concentration of 0.001 mol/L to 1 mol/L. The concentration of the elemental sulfur in solution B includes, but is not limited to, 0.001 mol/L, 0.002 mol/L, 0.005 mol/L, 0.008 mol/L, 0.01 mol/L, 0.02 mol/L, 0.05 mol/L, 0.07 mol/L, 0.09 mol/L, 0.1 mol/L, 0.5 mol/L, 0.8 mol/L or 1 mol/L. Preferably, the elemental sulfur is sulfur.

In one embodiment, in step S6, the solution B is introduced into the sol A in an introduction rate of 0.4 g/min to 0.6 g/min. Specifically, the introduction rate includes, but is not limited to, 0.4 g/min, 0.45 g/min, 0.5 g/min, 0.55 g/min or 0.6 g/min. It can be understood that, on the one hand, step S6 may induce the sulfide Q₂S pre-coated lithium transition metal oxide modified material to undergo an interfacial reaction, so that the sulfur elements therein are connected to the active elements in the lithium transition metal oxide particles through chemical bonds, thereby anchoring the active elements at the interface of the lithium transition metal oxide particles. On the other hand, the sulfide Q₂S pre-coated lithium transition metal oxide modified material reacts with the elemental sulfur to produce the stabilizing layer of the present application, so that the average valence of the sulfur elements in the stabilizing layer is between -2 and 0, so as to successfully prepare the positive electrode active material of the present application. In the present application, the device for introducing the solution B into the sol A includes, but is not limited to, a peristaltic pump.

The thickness and coating rate of the coating layer may be effectively controlled by limiting the solid content of the sol A, the sulfur concentration of the solution B, and the introduction rate of the solution B into the sol A, so as to drive the prepared coating layer to form the stabilizing layer on the surface.

In one embodiment, process parameters for sintering of the step S6 comprise: a sintering temperature of 200°C to 800°C, a sintering time of 8h to 30h. Specifically, the sintering temperature includes, but is not limited to, 200°C, 250°C, 300°C, 350°C, 400°C, 450°C, 500°C, 600°C, 700°C, 750°C or 800°C. The sintering time includes, but is not limited to, 8h, 9h, 12h, 15h, 20h, 25h or 30h. By limiting the sintering temperature and sintering time, on the one hand, the active elements at the interface between the lithium transition metal oxide particles and the sulfide Q₂S may be anchored with S²⁻ to stabilize the active transition metal elements on the surface; on the other hand, the sulfide Q₂S may react with the elemental sulfur to make the average valence of the sulfur elements in the stabilizing layer between -2 and 0.

In one embodiment, the sintering of the step S6 is carried out in an inert atmosphere, including but not limited to argon.

In one embodiment, the method for preparing the lithium transition metal oxide particles comprise steps of:
S1. mixing a precursor with a lithium source to prepare a mixture; and
S2. sintering the mixture at a temperature of 400°C to 1000°C to prepare the lithium transition metal oxide particles.

In one embodiment, in step S1, the precursor has a chemical formula of Ni_{y1}R_{z1}M_{1-y1-z1}Oᵤ₁, where 0.3≤y1≤0.8, 0≤z1≤0.7, y1+z1≤1, 1.8≤u1≤2.2; R includes one or more of Co or Mn; M includes one or more of Al, Zr, Mg, Ti, W, B, Y, Sr, Nb and Mo elements. Specifically, when R is Co, the chemical formula of the precursor includes, but is not limited to, Ni₁Co_{z1}Al_{1-y1-z1}(OH)₂, or the like, specifically but not limited to, Ni_{0.6}Co_{0.4}(OH)₂, Ni_{0.7}Co_{0.3}(OH)₂. When R is Mn, the chemical formula of the precursor includes, but is not limited to, Ni_{0.5}Mn_{0.5}(OH)₂, Ni_{0.9}Mn_{0.1}(OH)₂, or the like. When R is Co and Mn, the chemical formula of the precursor includes, but is not limited to, Ni_{1/3}CO_{1/3}Mn_{1/3}(OH)₂, Ni_{0.5}CO_{0.2}Mn_{0.3}(OH)₂, Ni_{0.6}Co_{0.1}Mn_{0.3}(OH)₂, Ni_{0.63}Co_{0.08}Mn_{0.29}(OH)₂, Ni_{0.63}Co_{0.05}M_{n0.32}(OH)₂, Ni_{0.65}Co_{0.07}Mn_{0.28}(OH)₂, Ni_{0.7}Co_{0.1}Mn_{0.3}(OH)₂, Ni_{0.72}Co_{0.05}Mn_{0.23}(OH)₂, Ni_{0.68}Co_{0.08}Mn_{0.24}(OH)₂, Ni_{0.83}Co_{0.12}Mn_{0.05}(OH)₂, Ni_{0.8}Co_{0.1}Mn_{0.1}(OH)₂, NiₐCo_{b}Mn_{c}Al_{d}(OH)₂ (a+b+c+d=1)_{∘}

In one embodiment, in the mixture of step S1, a molar number of lithium element in the lithium source and a total molar number of metal elements in the precursor Ni_{y1}R_{z1}M_{1-y1-z1}Oᵤ₁ are in a ratio of 0.8 to 1.2: 1. Specifically, the ratio of the molar number of lithium element in the lithium source to the total molar number of metal elements in the precursor Ni_{y1}R_{z1}M_{1-y1-z1}Oᵤ₁ includes, but is not limited to, 1.2:1, 1.1:1, 1:1, 0.9:1 or 0.8:1.

In one embodiment, in step S1, the lithium source includes one or more of lithium carbonate, lithium hydroxide, lithium acetate, lithium citrate and lithium oxalate.

In one embodiment, in step S2, the process parameters for sintering comprise: a sintering temperature of 400°C to 1000°C, a sintering time of 8h to 30h. Specifically, the sintering temperature includes, but is not limited to, 400°C, 500°C, 600°C, 700°C, 800°C, 900°C or 1000°C. The sintering time includes, but is not limited to, 8h, 10h, 12h, 15h, 18h, 20h, 25h or 30h.

In one embodiment, the sintering of step S2 is performed in an atmosphere of oxygen and/or air.

In a third aspect, the present application provides a positive electrode of a lithium-ion battery, comprising a positive electrode current collector and a positive electrode active material layer laminated on the surface of the positive electrode current collector. The positive electrode active material layer comprises the positive electrode active material according to any one of the first aspect of the present application or comprises the positive electrode active material prepared by the method according to any one of embodiments of the second aspect of the present application.

In a fourth aspect, the present application provides a lithium-ion battery, comprising:
the positive electrode of the lithium-ion battery according to the third aspect of the present application;
a negative electrode, comprising a negative electrode current collector and a negative electrode active material layer located on the negative electrode current collector; and
a separator and an electrolyte solution.

The negative electrode, the separator and the electrolyte solution can be conventional negative electrode current collector, separator and electrolyte solution materials in the art. The present application has no special restrictions on them.

The negative electrode current collector may be copper. A shape of the negative electrode current collector is also not particularly limited. It can be rod-shaped, plate-shaped, sheet-shaped, and foil-shaped, and can vary depending on the shape of the lithium-ion battery, or the like. The negative electrode active material layer comprises a negative electrode active material, a conductive additive, and a binder. The negative electrode active material, the conductive additive, and the binder are also conventional materials in the art. In some embodiments, the negative electrode active material is metallic lithium.

The separator may be selected from separators commonly used in lithium-ion batteries, such as polyolefin films, including microporous films made of polyethylene and polypropylene; multilayer films of porous polyethylene and polypropylene films; non-woven fabrics formed by polyester fibers, aramid fibers, glass fibers, and the like; and base films formed with ceramic particles such as silicon dioxide, aluminum oxide, and titanium dioxide attached on the surfaces thereof, or the like. In some embodiments, the separator is a three-layer film of PP/PE/PP coated with aluminum oxide on both sides.

The electrolyte solution may comprise an electrolyte and a non-aqueous organic solvent. The electrolyte is preferably LiPF₆, LiBF₄, LiSbF₆, or LiAsF₆. The non-aqueous organic solvent may be carbonate ester, ester and ether. The carbonate ester such as ethylene carbonate (EC), diethyl carbonate (DEC), dimethyl carbonate (DMC) and ethyl methyl carbonate (EMC) may be preferably used. In some embodiments, the electrolyte solution is a non-aqueous electrolyte solution of ethylene carbonate (EC)/dimethyl carbonate (DMC) with a LiPF₆ concentration of 1 mol/L, where EC to DMC are in a volume ratio of 1:1.

The present application further provides an electrical device, comprising a lithium-ion battery according to the fourth aspect of the present application.

The following specific embodiments are intended to further explain the present application in detail to make those skilled in the art and researchers in the field to further understand the present application. The relevant technical conditions do not constitute any limitation to the present application. Any form of modification made within the scope of the claims of the present application is within the scope of protection of the claims of the present application.

In the examples and comparative examples, the negative electrode of the button-type battery is metallic lithium; the separator is a three-layer film of PP/PE/PP coated with aluminum oxide on both sides; the electrolyte solution is a non-aqueous electrolyte solution of ethylene carbonate (EC)/dimethyl carbonate (DMC) with a LiPF₆ concentration of 1 mol/L, where EC and DMC are in a volume ratio of 1:1.

### Example 1

### (1) Preparation of lithium transition metal oxide particles

A precursor raw material (Ni_{0.6}Co_{0.4}(OH)₂, purchased from Aladdin reagent, with a particle size of 2µm to 15µm) was mixed with lithium hydroxide to prepare a mixture, where Li and (Ni+Co) in the mixture were in a molar ratio of 1.05:1. The mixture was heated at 950°C in an oxygen atmosphere in a box furnace for 15 h, and crushed by pair rollers (upper spacing 15 cm, lower spacing 5 cm) to obtain a substrate with a chemical formula of LiN_{i0.6}Co_{0.4}O₂.

### (2) Preparation of sulfide Li₂S pre-coated lithium transition metal oxide modified material

2500g of the LiNi_{0.6}Co_{0.4}O₂ substrate prepared in step (1) was provided, and 10.5g of lithium sulfide was added. They were mixed evenly by solid phase method at a speed of 1200 rpm/min, and calcined at 400°C for 8h to prepare sulfide Li₂S pre-coated lithium transition metal oxide modified material.

### (3) Preparation of positive electrode active material

100g of the sulfide Li₂S pre-coated lithium transition metal oxide modified material prepared in step (2) and 5g of dodecyltrimethylammonium chloride were added to 200g of carbon disulfide solution, and stirred at 300rpm/min to form a stable sol A with a solid content of 48.8%.

5g of sulfur was added to 200g of carbon disulfide, stirred and dissolved at 500rpm/min to prepare a solution B with a sulfur concentration of 0.98mol/L.

The solution B was introduced into the sol A at a rate of 0.5g/min through a peristaltic pump. After the addition was completed, stirring was performed for 24h. After solid-liquid separation was performed, the solid was collected. The solid was calcined at 300°C for 6h under the argon atmosphere to induce the generation of the anchoring layer containing S²⁻ and the stabilizing layer with the average valence m2 of sulfur elements satisfying -2<m2<0, and the positive electrode active material was prepared.

### Example 2

Example 2 was basically the same as Example 1, except that 10.5 g of sodium sulfide was added in step (2) of Example 2.

### Example 3

Example 3 was basically the same as Example 2, except that the precursor raw material added in step (1) of Example 3 was Ni_{0.7}Co_{0.3}(OH)₂, purchased from Aladdin reagent, with a particle size of 2µm to 15µm.

### Comparative example 1

Comparative example 1 was basically the same as Example 1, except that Comparative example 1 only comprised step (1). The specific steps were as follows:

The precursor raw material (Ni_{0.6}Co_{0.4}(OH)₂, purchased from Aladdin reagent, with a particle size of 2µm to 15µm) was mixed with lithium hydroxide to prepare a mixture. Li and (Ni+Co) in the mixture were in a molar ratio of 1.05:1. The mixture was heated in an oxygen atmosphere in a box furnace at 950°C for 15 h, and crushed with pair rollers (upper spacing 15cm, lower spacing 5cm) to obtain a substrate with a chemical formula of LiNi_{0.6}Co_{0.4}O₂.

### Comparative example 2

Comparative example 2 provided a positive electrode material coated by a conventional dry method (LiNi_{0.6}Co_{0.4}O₂@Al₂O₃). The specific steps were as follows:

The substrate was prepared in exactly the same method as Example 1. The substrate (2500 g) was mixed evenly with nano-alumina (10 g), and sintered at 450°C for 8 h in an air atmosphere in a box furnace.

### Comparative example 3

Comparative example 3 provided a positive electrode material coated by a conventional dry method (LiNi_{0.6}Co_{0.4}O₂@TiO₂). The specific steps were as follows:

The substrate was prepared in exactly the same manner as Example 1. The substrate (2500 g) was mixed evenly with nano-titanium dioxide (10 g), and sintered at 450°C for 8 h in an air atmosphere in a box furnace.

### Comparative example 4

Comparative example 4 was basically the same as Example 1, except that Comparative example 4 only comprised step (1) and step (2). The prepared product was a sulfide Li₂S pre-coated lithium transition metal oxide modified material.

X-ray photoelectron spectroscopy (XPS) was tested using an AXIS Supra model X-ray photoelectron spectrometer to study the types and chemical environments of the surface elements of the positive electrode active material of the Examples and the Comparative examples. The positive electrode active materials prepared in Examples 1 to 3 and Comparative examples 1 to 4 were assembled into button-type batteries, where the positive electrode active material: conductive carbon black = 90:10wt%, the solvent was NMP, and the surface density of the battery electrode plate was 1.2mg/cm². After charging and discharging for 1 cycle at a voltage of 2.8V to 4.4V and 45°C at a rate of 0.1C/0.1C, and then performing a cycle performance test at a rate of 1C/1C and 45°C for 50 cycles, the battery was disassembled, and the positive electrode plate was cleaned with DMC, and dried. The positive electrode active material powder was scraped off for surface metal element valence analysis. The full spectrum peak was first scanned at 0 to 1200eV, and then the fine peak of Ni was tested. The ratio of Ni²⁺ and Ni³⁺ was obtained by peak separation. The results are shown in Table 1.

**Table 1**

| Group | Ni²⁺/% | Ni³⁺/% | Average valence of Ni |
|---|---|---|---|
| Example 1 | 0.62 | 0.38 | 2.38 |
| Example 2 | 0.60 | 0.40 | 2.40 |
| Example 3 | 0.61 | 0.39 | 2.39 |
| Comparative example 1 | 0.85 | 0.15 | 2.15 |
| Comparative example 2 | 0.71 | 0.29 | 2.29 |
| Comparative example 3 | 0.70 | 0.30 | 2.30 |
| Comparative example 4 | 0.72 | 0.28 | 2.28 |

It can be seen from Table 1 that the average valence of Ni on the surface of the materials of Examples 1 to 3 is higher than the average valence of Ni on the surface of the materials of Comparative examples 1 to 4. This indicates that the stabilizing layer on the surface has a stabilizing effect on the active sites of the Ni element on the surface, improves the average valence of the Ni element on the surface, inhibits the formation of the divalent nickel compound NiO in the surface rock salt phase, and further avoids the inert NiO from reducing the electrochemical performance of the material.

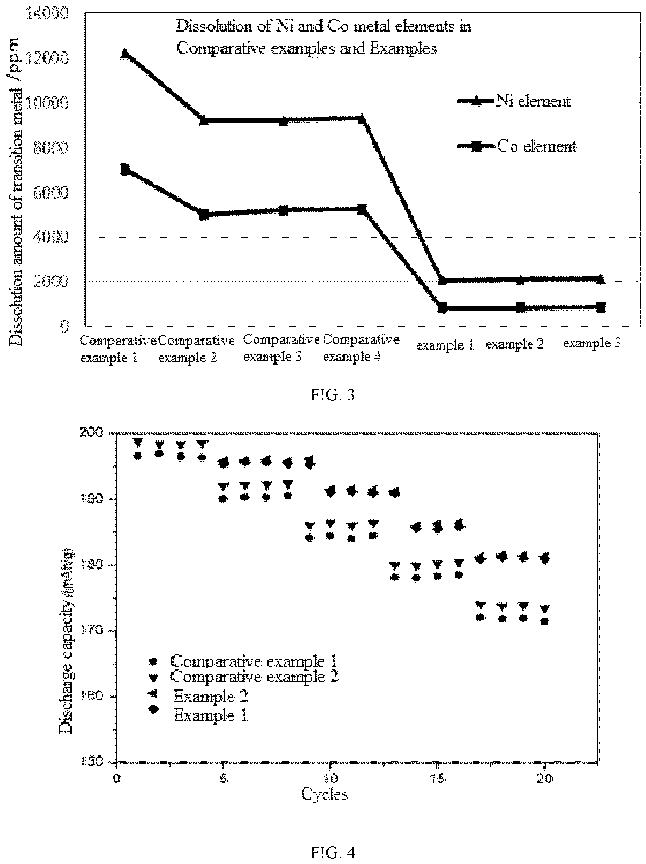

The positive electrode active materials prepared in Examples 1 to 3 and Comparative examples 1 to 4 were respectively assembled into button-type batteries, where the positive electrode active material: conductive carbon black = 90:10wt%, the solvent was NMP, and the surface density of the battery electrode plate was 1.2mg/cm². When the battery was fully charged (4.4V), the battery was disassembled after being stored at 60°C for 30 days and 60 days, respectively. The positive electrode plate was cleaned with DMC, and dried. The active material layer of the positive electrode plate was scraped off. Then, the active material layer was heated to dissolve in aqua regia for 15-30min. The solution was subjected to ICP to test the dissolution of active transition metal elements such as Ni, Co, and Mn, and the dissolution of Ni and Co elements in the electrolyte solution. The results are shown in Table 2 and Figure 3.

**Table 2**

| Group | Dissolution amount of Ni after 60 days storage/ppm | Dissolution amount of Co after 60 days storage/ppm |
|---|---|---|
| Example 1 | 2067 | 816 |
| Example 2 | 2098 | 830 |
| Example 3 | 2128 | 852 |
| Comparative example 1 | 12210 | 7021 |
| Comparative example 2 | 9202 | 5005 |
| Comparative example 3 | 9182 | 5160 |
| Comparative example 4 | 9292 | 5217 |

As can be seen from Table 2, the dissolution amount of active transition metal elements Ni and Co in the battery made of the material of the Examples of the present application after long-term storage is significantly lower than the dissolution amount of active transition metal elements Ni and Co in the battery made of the material of the Comparative examples, indicating that the material of the Examples of the present application can resist HF corrosion. Due to the presence of the coating layer, an effective and stable interface layer may be formed, to isolate and inhibit HF corrosion of the material, reduce the interface reaction of the electrode/electrolyte solution, and reduce the dissolution amount of transition metal.

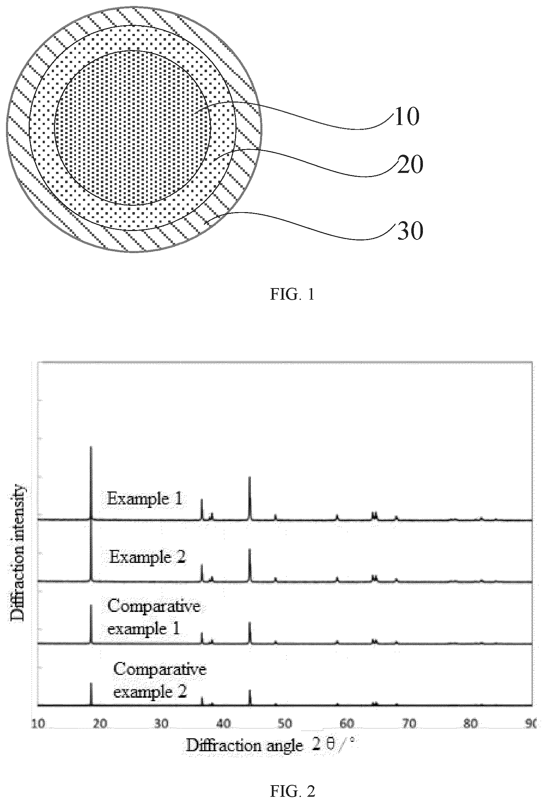

The positive electrode active material prepared in each Example and Comparative example was assembled into a button-type battery, where the positive electrode active material: conductive carbon black = 90:10wt%, the solvent was NMP, and the surface density of battery electrode plate was 1.2 mg/cm². After charging and discharging for 50 cycles at a voltage of 2.8V to 4.45V and 45°C at a rate of 0.1C/0.1C, the button-type battery was disassembled and the positive electrode plate was cleaned with DMC, and dried. The positive electrode active material powder was scraped off. The positive electrode active material prepared in each Example and Comparative example was placed on a sample stage of the XRD test instrument (model Bruker D8) with a scanning rate of 1°/min and a scanning angle range of 10° to 80°. The XRD data was processed by using GSAS refinement. The XRD data was refined by Pawley full spectrum fitting method. The XRD comparison results are shown in Figure 2 and Table 3.

**Table 3**

| Group | I₀₀₃/I₁₀₄ | Interlayer distance change rate ΔH of transition metal /% | Li/Ni mixed occupancy rate/% |
|---|---|---|---|
| Example 1 | 1.510 | 7.2 | 1.6 |
| Example 2 | 1.526 | 7.5 | 1.4 |
| Example 3 | 1.491 | 6.9 | 1.9 |
| Comparative example 1 | 1.285 | 21.2 | 5.5 |
| Comparative example 2 | 1.312 | 11.2 | 3.5 |
| Comparative example 3 | 1.301 | 10.9 | 3.2 |
| Comparative example 4 | 1.359 | 10.3 | 3.6 |

As shown in FIG. 2, no impurity peaks appear in the samples of the Examples after 50 cycles, indicating that the coated material does not change the crystal structure of the positive electrode active material under extreme conditions, and can maintain the structural stability of the material. In addition, it can be seen from Table 3 that the 003/104 peak of the Examples is significantly higher than the 003/104 peak of the Comparative examples, and has a lower Li/Ni mixed occupancy, indicating that the positive electrode active material of Examples 1 to 3 has better layered structural stability.

The interlayer distance change rate ΔH of the surface transition layer after 50 cycles was calculated: ΔH=[H2 (50 cycles) - H1 (0 cycles)] / H1 (0 cycles), where H2 was an interlayer distance between the transition metal and oxygen in the surface layer of the lithium composite transition metal oxide after 50 cycles, and H1 was an interlayer distance between the transition metal and oxygen in the surface layer of the lithium composite transition metal oxide before charging. The interlayer distance change rate of the metal for 50 cycles is shown in Table 3. When the interlayer distance change rate is not higher than 10% after 50 cycles, it is considered that the material has good interface stability. When the interlayer distance change rate is greater than 10%, it can be considered that the surface structure of the material has undergone serious structural abnormality. The main reason for the surface structural abnormality of the material is that the interface of the material is corroded by HF generated by the electrolyte solution or electrode/interface reaction to form rock salt phases. From the results, it can be seen that the ΔH value of the Examples is within 10% and is significantly lower than the ΔH value of the Comparative examples, whereas the interlayer distance change rate of the transition metal of the Comparative examples is higher than 10%, indicating that the positive electrode active material prepared in the Examples has better surface structural stability.

The materials prepared in the Examples and the Comparative examples were respectively subjected to cycle test at 45°C and DCR performance test. The test methods were as follows. Appropriate amounts of the materials prepared in the Examples and the Comparative examples were weighed and assembled into button-type batteries respectively, where the electrode material: conductive carbon black = 90:10 (wt%), the solvent was NMP, and the surface density of the battery electrode plate was 1.2 mg/cm². After charging and discharging for 1 cycle at a voltage of 2.8V to 4.4V and 45°C at a rate of 0.1C/0.1C, a cycle performance test was performed at a rate of 1C/1C and 45°C for 50 cycles. The DCR growth of the material was calculated by the following method: at the beginning of discharge of each cycle, the battery was discharged at a rate of 1C for 10s and then allowed to stand for normal charge and discharge. The DCR of the material after the 50^{th} cycle = (voltage drop after discharging for 10s at the beginning of discharge of the 50^{th} cycle) / discharging current. The DCR growth after 50 cycles = (DCR of the material after the 50^{th} cycle - DCR of the material after the 1^{st} cycle) / DCR of the material after the 1^{st} cycle. The test results are shown in FIG. 4 and Table 4.

**Table 4**

| Sample source | Discharge capacity at 0.1C (mAh/g) | Cycle retention rate after 50 cycles /% | DCR growth after 50 cycles (%) |
|---|---|---|---|
| Example 1 | 201.1 | 96.5 | 69.5 |
| Example 2 | 200.8 | 96.7 | 70.1 |
| Example 3 | 200.6 | 96.3 | 71.0 |
| Comparative example 1 | 196.6 | 89.0 | 112.1 |
| Comparative example 2 | 198.8 | 93.5 | 89.9 |
| Comparative example 3 | 199.0 | 93.8 | 90.4 |
| Comparative example 4 | 199.2 | 94.2 | 91.0 |

It can be seen from the data in Table 4 that compared with Comparative example 1, Comparative Examples 2 to 3 have a significant improvement in capacity and retention rate performance, and a significant decrease in DCR, indicating that the traditional solid phase coating method can indeed improve the interface of the material and improve the electrochemical performance of the material. It can be seen from the data of Examples 1 to 3 that the charge and discharge capacity of the battery made of the materials of the Examples of the present application is further improved by about 2mAh/g compared to Comparative examples 2 to 4, and the DCR growth after 50 cycles is further decreased by about 20%. It shows that the coating layer prepared in the Examples of the present application can effectively stabilize the active transition metal element on the interface and significantly improve the material capacity, cycle performance and the DCR growth.

The technical features of the above-described embodiments may be combined in any way. To simplify the description, not all possible combinations of the technical features in the above-described embodiments are described. However, as long as there is no contradiction in the combination of these technical features, all should be considered to be within the scope of the present application.

The above-mentioned embodiments only express several embodiments of the present application, and their descriptions are relatively specific and detailed, but they should not be understood as limiting the scope of the present application. It should be noted that, for those skilled in the art, several modifications and improvements may be made without departing from the concept of the present application, and these all belong to the protection scope of the present application. Therefore, the scope of protection of the present application should be determined by the appended claims.

## Claims

1. A positive electrode active material, comprising lithium transition metal oxide particles and a coating layer arranged on a surface of the lithium transition metal oxide particles, wherein the coating layer comprises an anchoring layer and a stabilizing layer arranged laminatedly, the anchoring layer is closer to the surface of the lithium transition metal oxide particles than the stabilizing layer;
the anchoring layer and the stabilizing layer comprise sulfur elements, an average valence of the sulfur elements contained in the stabilizing layer is greater than an average valence of the sulfur elements contained in the anchoring layer;
the anchoring layer is configured to anchor active elements in the lithium transition metal oxide particles, and in the lithium transition metal oxide particles having the coating layer, the transition metal has a total dissolution amount of ≤ 4000ppm.

2. The positive electrode active material according to claim 1, wherein the lithium transition metal oxide particles have a chemical formula of Li₁₊ₓNi_{y}R_{z}M_{1-y-z}Oᵤ, wherein -0.2≤x≤0.2, 0.3≤y≤0.8, 0≤z≤0.7, y+z≤1, 1.8≤u≤2.2; R includes one or more of Co and Mn; M includes one or more of Al, Zr, Mg, Ti, W, B, Y, Sr, Nb and Mo elements.

3. The positive electrode active material according to claim 2, wherein the anchoring layer is formed by inducing Ni, R or M in the lithium transition metal oxide particles by sulfide Q₂S, and Q includes one or more of Na⁺, Li⁺ and NH₄⁺; the anchoring layer satisfies that m1=-2, wherein m1 is the average valence of the sulfur elements contained in the anchoring layer;
the stabilizing layer is formed by inducing the sulfide Q₂S by elemental sulfur and satisfies that -2<m2<0, wherein m2 is the average valence of the sulfur elements contained in the stabilizing layer.

4. The positive electrode active material according to any one of claims 1 to 3, wherein the positive electrode active material has one or more of the following features:
(1) the lithium transition metal oxide particles have a particle size of 2µm to 15µm;
(2) the anchoring layer has a thickness of 5nm to 50nm;
(3) the stabilizing layer has a thickness of 5nm to 50nm.

5. The positive electrode active material according to any one of claims 1 to 3, wherein after the positive electrode active material is assembled into a button-type battery and cycled for 50 cycles, the positive electrode active material has one or more of the following features:
(1) in an X-ray diffraction refinement test of the positive electrode active material, 003 peak/104 peak has a ratio of ≥1.45;
(2) in the X-ray diffraction refinement test of the positive electrode active material, the transition metal and oxygen have an interlayer distance change rate ΔH of ≤ 10%; wherein ΔH=(H₂-H₁)/H₁, H₂ represents an interlayer distance between the transition metal and oxygen in the positive electrode active material after 50 cycles; H₁ represents an interlayer distance between the transition metal and oxygen in the positive electrode active material at 0 cycle.

6. A method for preparing a positive electrode active material, comprising the following steps:
mixing the lithium transition metal oxide particles and sulfide Q₂S, and calcining at a temperature of 200°C to 700°C to prepare sulfide Q₂S pre-coated lithium transition metal oxide modified material, wherein Q includes one or more of Na⁺, Li⁺ and NH₄⁺;
mixing the sulfide Q₂S pre-coated lithium transition metal oxide modified material and dispersant in a carbon disulfide solvent to prepare a sol A;
dissolving elemental sulfur in a carbon disulfide solvent to prepare a solution B;
introducing the solution B into the sol A for deposition, performing solid-liquid separation, and then sintering at a temperature of 200°C to 800°C to prepare the positive electrode active material.

7. The method according to claim 6, wherein the method has one or more of the following features:
(1) the lithium transition metal oxide particles and the sulfide Q₂S have a mass ratio of 1:(0.001 to 0.1);
(2) the sol A has a solid content of 5% to 50%;
(3) the elemental sulfur in the solution B has a concentration of 0.001 mol/L to 1 mol/L;
(4) the pre-coated lithium transition metal oxide modified material and the elemental sulfur have a mass ratio of 1:(0.001 to 0.1);
(5) the solution B is introduced into the sol A in an introduction rate of 0.4g/min to 0.6g/min.

8. The method according to claim 6 or 7, wherein a method for preparing the lithium transition metal oxide particles comprises steps of
mixing a precursor with a lithium source to prepare a mixture; and
sintering the mixture at a temperature of 400°C to 1000°C to prepare the lithium transition metal oxide particles;
wherein the precursor has a chemical formula of Ni_{y1}R_{z1}M_{1-y1-z1}Oᵤ₁, wherein 0.3≤y1≤0.8, 0≤z1≤0.7, y1+z1≤1, 1.8≤u1≤2.2; R includes one or more of Co and Mn, M includes one or more of Al, Zr, Mg, Ti, W, Y, Sr, Nb and Mo elements.

9. A positive electrode, comprising a positive electrode current collector and a positive electrode active material layer laminated on a surface of the positive electrode current collector, wherein the positive electrode active material layer comprises the positive electrode active material according to any one of claims 1 to 5 or comprises the positive electrode active material prepared by the method according to any one of claims 6 to 8.

10. A lithium-ion battery, comprising:
the positive electrode according to claim 9,
a negative electrode, comprising a negative electrode current collector and a negative electrode active material layer located on the negative electrode current collector;
a separator and an electrolyte solution.
